# EUROPEAN PATENT APPLICATION

(11) **EP 2 338 831 A1**
(43) Date of publication of application: **29.06.2011**
(21) Application number: 10251029.4
(22) Date of filing: 03.06.2010
(51) Int. Cl.: C01B 3/38, C01B 3/48, B01J 8/04, F28F 9/20, F23M 5/00, F23M 9/00

(54) **Reformer with high durability**

(30) Priority: 24.12.2009 US 290137 P
(71) Applicant: Samsung SDI Co., Ltd., Gyeonggi-do (KR)
(72) Inventor: Son, In-Hyuk, Suwon-si Gyeonggi-do (KR)
(74) Representative: Taor, Simon Edward William

(57) **Abstract**

Embodiments of the present invention relate to a reformer with high durability, and more particularly, the reformer with high durability according to the embodiment of the present invention includes a generator, a heating unit, and a reforming unit. The generator is generated by an oxidation reaction of reformate. The heating unit has a hollow cylindrical shape or polygonal shape and a first combustor and a second combustor that receive and oxidize heating unit fuel and anode off gas (AOG) are provided at both ends thereof. The reforming unit includes a first space formed to surround the exterior of the heating unit, a second space formed to surround the exterior of the first space, and a connector connecting the first space and the second space on the outside of the second combustor to be in fluid communication, and reforms fuel cell fuel by heat transmitted from the heating unit and supplies generated reformate to the generator. At this time, at least one curve portion is formed on each of the top and bottom of the connector provided perpendicularly to the central axis of the heating unit.

The reformer with high durability according to embodiments of the present invention can operate an environment-friendly fuel cell while ensuring the long-time lifespan by improving reforming efficiency and reliability.

## Description

### BACKGROUND

### 1. Field of the Invention

Embodiments of the present invention relate to a reformer, in particular a reformer with high durability, and more particularly, to a reformer structure that prevents breakage and damage caused due to thermal expansion.

### 2. Discussion of Related Art

As concerns about environmental pollution increase, development of alternative energy such as a fuel cell which is non-pollutive and excellent in energy efficiency, etc. is in active progress.

A fuel cell is a device that directly converts chemical energy into electric energy through electrochemical reaction of hydrogen and oxygen. Fuel cells are classified into a polyelectrolyte fuel cell, a solid oxide fuel cell, and a molten carbonate fuel cell in accordance with the electrolyte type. Hydrogen used in the polyelectrolyte fuel cell is typically acquired from reformate reforming fuel such as methanol, liquid petroleum gas (LPG), gasoline, etc. due to various difficult problems caused by storing and transporting pure hydrogen. Therefore, in most fuel cell systems using steam reforming type reformate, a heating unit supplying heat required for steam reforming reaction is provided.

Meanwhile, reformate that remains after electrons are generated from a stack is discharged from the anode and this is referred to as anode off gas (AOG). In the related art, the AOG is combusted by using an additional catalytic combustor or mixed with atmospheric gas to be discharged by decreasing the concentration of discharge gas such as H₂, CO, and CH₄ in the AOG.

However, a worldwide environmental standard gradually shows an upward tendency and further, more positive management of the AOG is required to manufacture a fuel cell which is usable even in a room. That is, by considering that a main component of the AOG gas is hydrogen (H₂) in addition to satisfy the environmental standard in terms of atmospheric pollution through a method for combusting the AOG gas, a technological development that allows it to contribute to more positively improve the efficiency of the reformer is important.

To this purpose, a reformer that oxidizes or combusts the AOG again by returning the AOG to a heating unit of the reformer to improve thermal efficiency and suit the environmental standard is proposed. However, reformers show a characteristic in which high-temperature atmosphere is maintained by oxidation of reforming fuel, heating unit fuel, and the AOG, such that a plurality of hot spots can be generated. As a result, alleviation of the hot spot and distributed design are important. That is, in order to allow the reformer to operate for a long time without deterioration or damage, as described above, thermal shock caused by repetition of thermal expansion and shrinkage should be minimized through alleviation or distribution of the hot spots and deterioration and damage caused due to thermal stress should be minimized.

However, even by a method for distributing and alleviating the hot spots, since the heating unit operates at high-temperature atmosphere, it is difficult to reach a satisfactory level in terms of management of the lifespan of the reformer and a more positive protection means is required.

### SUMMARY OF THE INVENTION

According to the necessity, some embodiments of the present invention provide a means for preventing the pressure of a combustor from being increased due to deterioration by appropriately distributing points where hot spots generated by introducing anode discharge gas into a heating unit of a reformer and oxidizing are formed.

According to the necessity, some embodiments of the present invention provide a means for preventing the pressure of a combustor from being increased due to deterioration by appropriately distributing points where hot spots generated by introducing anode discharge gas into a heating unit of a reformer and oxidizing are formed.

Further, some embodiments of the present invention provide a means for minimizing thermal transformation around a combustor, which is generated by high-temperature atmosphere.

In addition, some embodiments of the present invention provide a means for increasing the efficiency of a reformer by increasing combustion efficiency of discharge gas.

In order to achieve the above-mentioned aims, according to an embodiment of the present invention, a reformer with high durability includes a generator, a heating unit, and a reforming unit. The generator is generated by an oxidation reaction of reformate. The heating unit has a hollow cylindrical shape or polygonal shape and a first combustor and a second combustor that receive and oxidize heating unit fuel and anode off gas (AOG) are provided at both ends thereof. The reforming unit includes a first space formed to surround the exterior of the heating unit, a second space formed to surround the exterior of the first space, and a connector connecting the first space and the second space on the outside of the second combustor to be in fluid communication, and reforms fuel cell fuel by heat transmitted from the heating unit and supplies generated reformate to the generator. At this time, at least one curve portion is formed on each of the top and bottom of the connector provided perpendicularly to the central axis of the heating unit.

Further, a convex surface may be formed in the curve portion toward the outside of the heating unit.

In addition, a contour line of the curve portion may form a concentric circle based on the central axis of the heating unit.

Further, a nozzle may be formed in the second combustor so that the anode off gas flows in perpendicularly to the central axis of the hating unit.

In addition, the reforming unit may reform fuel cell fuel by a steam reforming method in the first space.

Besides, the reforming unit may perform a water gas shift (WGS) reaction in the second space.

According to configuration characteristics of the embodiment of the present invention, the reformer according to the embodiment of the present invention can prevent the pressure of a combustor from being increased due to deterioration by appropriately distributing points where hot spots generated by introducing anode discharge gas into a heating unit of a reformer and oxidizing are formed.

Further, in some embodiments of the present invention, a predetermined curved surface that is formed in the connector and is easily transformed by a difference in thermal expansion rate when the fuel cell operates and thereafter, is restored to the original state when the fuel cell does not operate, thereby minimizing thermal transformation generated at high-temperature atmosphere.

According to an aspect of the present invention, there is provided a reformer comprising: a heating unit comprising a heating unit chamber that extends in a first direction, and a combustor arranged to receive and oxidize anode off gas; a reforming unit including a first space formed around the heating unit chamber, a second space formed around the first space, and a flow path portion arranged to connect the first space and the second space at an end of the first and second space; wherein the reforming unit comprises a deformable region located adjacent the combustor, the deformable region arranged to deform in a predetermined manner as result from heat from the combustor. In some embodiments, the deformable region arranged to deform elastically in a said predetermined manner. As a result, in some embodiments, the deformable region is arranged to return to its original shape in the absence of heat from the combustor.

Preferred features of this aspect are set out in claims 2 to 15.

In addition, some embodiments of the present invention provide a means for increasing the efficiency of a reformer by increasing combustion efficiency of discharge gas.

Consequently, it is possible to operate an environmental-friendly fuel cell by ensuring the long-time lifespan through improving the efficiency and reliability of the reformer.

### BRIEF DESCRIPTION OF THE DRAWINGS

The accompanying drawings, together with the specification illustrate exemplary embodiments of the present invention, and, together with the description, serve to explain the principles of the present invention.

FIG. 1 is a longitudinal cross-sectional view schematically showing a configuration of a reformer which is being developed by the applicant.

FIG. 2 is a transverse cross-sectional view schematically showing a configuration of a reformer which is being developed by the applicant.

FIG. 3 is a longitudinal cross-sectional view for describing a crack generated while developing a reformer having a dual oxidization structure.

FIG. 4a is a longitudinal cross-sectional view showing a configuration of a connector according to an embodiment of the present invention.

Fig 4b is a plan view showing a bottom-curved plate of the connector.

Fig 4c is a bottom schematic view showing a curved portion of a bottom-curved plate in detail.

FIG. 5 is a longitudinal cross-sectional view showing a characteristic of a connector during operation according to an embodiment of the present invention.

FIG. 6 is a perspective view and a longitudinal cross-sectional view showing a second combustor having four nozzles per one line, which are horizontally arranged in two lines according to an embodiment of the present invention.

FIG. 7 is a perspective view and a longitudinal cross-sectional view showing a second combustor having six nozzles per one line, which are horizontally arranged in total two lines according to an embodiment of the present invention.

### DETAILED DESCRIPTION OF THE INVENTION

Hereinafter, embodiments of the present invention will be described with reference to the accompanying drawings. Terms representing directions such as 'up, down, left, and right' used in the embodiment of the present invention are based on states displayed in the drawings if particularly defined or referred.

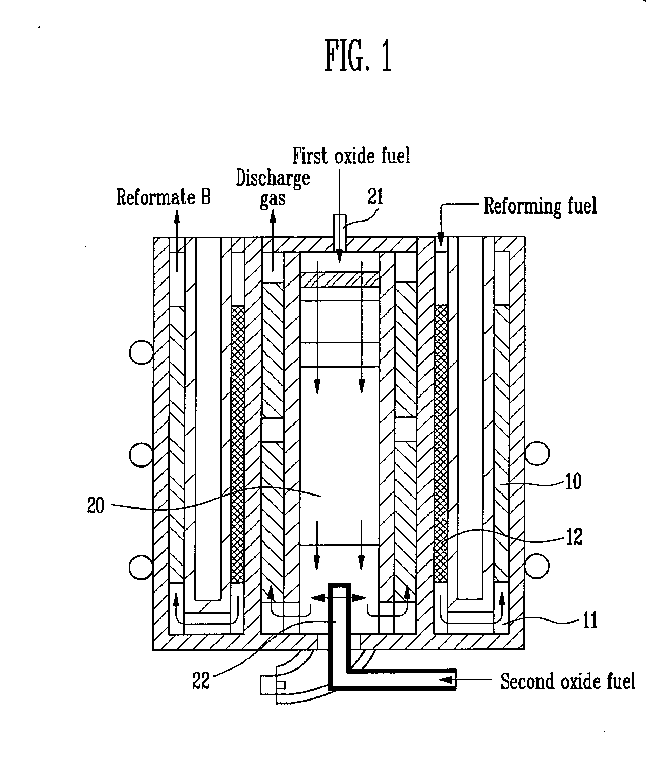

FIG. 1 schematically shows a reformer which is being presently developed by the applicant. Referring to FIG. 1, the reformer primarily includes a heating unit 20, reforming units 10, 11, and 12, a first combustor, and a second combustor. Hereinafter, the components will be described in detail.

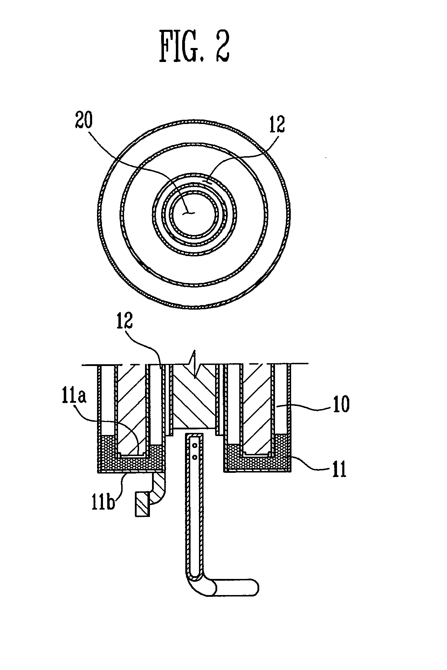

The reformer has the heating unit 20 at the center thereof on the basis of a longitudinal central axis. The heating unit 20 has a hollow cylindrical shape or polygonal shape. As shown in FIG. 2, a first space 12 surrounding the heating unit 20 is provided on the outside of the heating unit 20 and a second space 10 surrounding the first space 12 is provided on the outside of the first space 12. Further, the first space 12 and the second space 10 are connected with each other by a connector 11 on the bottoms thereof to be in fluid communication. The connector 11 is constituted by a top plate 11a and a bottom plate 11 b. The connector 11 is welded onto the bottoms of the first space 12 and the second space 10 to seal them. The connector 11 forms part of a flow path portion between the first space 12 and the second space 10.

By this structure, a thermal structure in which it is highest in temperature at the center and temperature falls outwards on the basis of the central axis of the reformer is formed to maintain uniform oxidation temperature.

Meanwhile, the first combustor and the second combustor that receive and oxidize heating unit fuel and anode off gas (AOG) are provided at both ends of the heating unit 20. At this time, the heating unit fuel includes primary fuel such as LPG, etc. supplied to maintain the temperature of the heating unit 20. Further, the AOG is an uncombusted gas using hydrogen discharged from an anode as a primary component after electricity is generated through an oxidation reaction in a generator (not shown) which is a composite of a fuel cell, etc. In the illustrated arrangement, the first combustor supplying and oxidizing the heating unit fuel is provided on the bottom of the heating unit 20 and the second combustor resupplying and oxidizing the AOG is provided on the bottom of the heating unit 20.

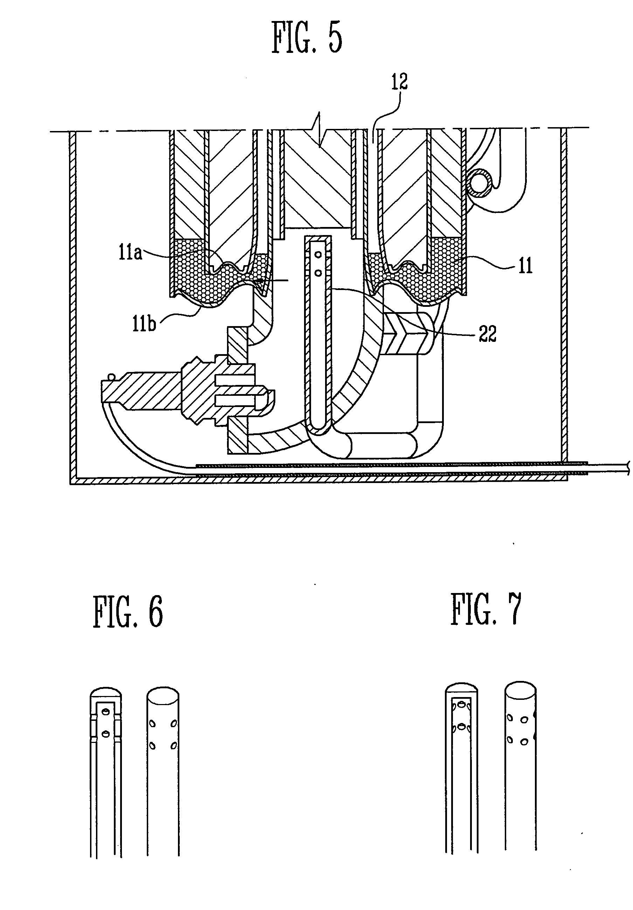

The second combustor 22 has a nozzle injecting the AOG to flow in perpendicularly to the central axis of the heating unit 20 as shown in FIGS. 6 and 7. That is, in case of the nozzle of the second combustor 22, a plurality of nozzles formed in a transverse direction maximize a mixing effect of the AOG and disables or disperse the hot spot to be concentrated on the vicinity of the first oxide catalyst layer as shown in FIG. 6.

A basic reaction of the reformer is as follows. That is, when the heating unit fuel such as LPG, etc. is supplied to the heating unit 20 to maintain temperature required for reforming, the fuel cell is reformed (SR) in the first space 12 by heat transmitted from the heating unit 20. Reformate generated at that time is supplied to the generator (not shown) with carbon monoxide reduced through WGS reactions in the connector 11 and the second space 10. Reformate (~71% H₂, 25% CO₂, ~1% CH₄) of 7LPM generated in the reformer produces electricity through the generator such as the stack and thereafter, the generation amount of remaining reformate (~47% H₂, ~45% CO₂, ~1% CH₄, N₂ balance) is approximately 4.3LPM. That is, in case of the embodiment by the applicant, hydrogen of approximately 3 SLPM of hydrogen having a generation amount of approximately 5 SLPM is used to generate electricity and hydrogen of 2 SLPM remains as remaining gas, that is, the AOG. The AOG generated as described above is supplied into the heating unit 20 through the second combustor 22 and thereafter, is primarily oxidized and converted into heat.

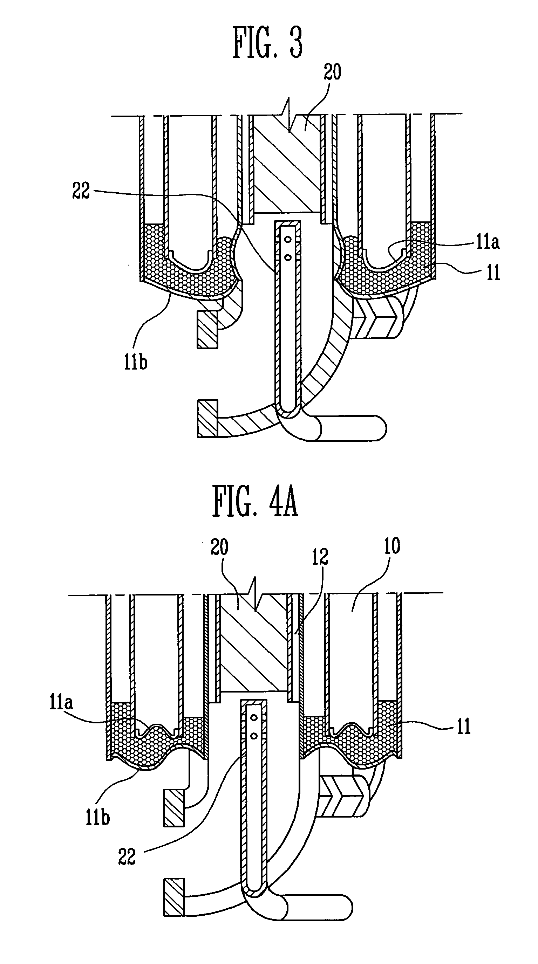

A test operation evaluating the hot spots and an influence on peripheral devices by the AOG has been performed while developing the reformer. As a result, as shown in FIG. 3, the bottom of the inner peripheral surface of the first space 12 is transformed by thermal expansion at high-temperature atmosphere. At this time, the top plate 11a and the bottom plate 11 b of the connector 11 constraints the transformation by the thermal expansion to be strongly stressed. Thereafter, the top plate 11a and the bottom plate 11 b are simultaneously transformed by high temperature or welding parts to the first space are damaged during the transformation. The thermal strength (the amount and concentration of hydrogen in the AOG), a thermal shock condition by a reformer operation (on-off) logic and characteristics of a material of SUS steel configuring the reformer influences the transformation strength.

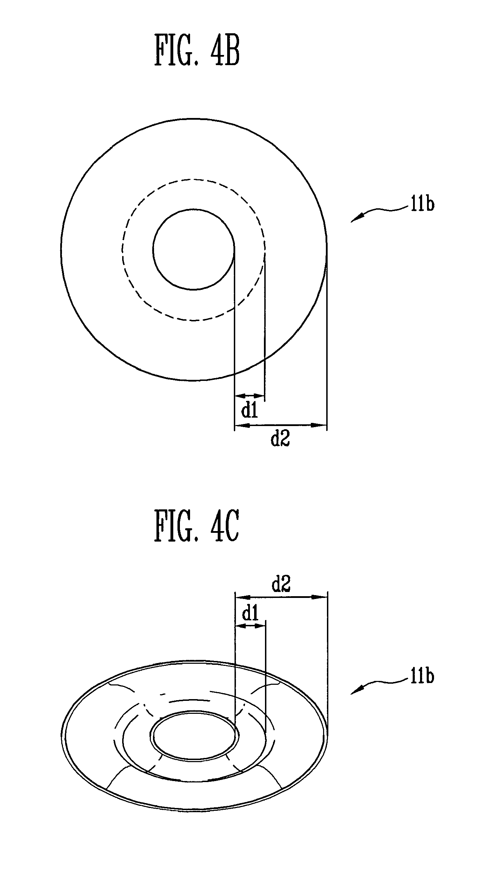

Some embodiments of the invention address this problem through structural reinforcement of the thermal transformation. That is, as shown in FIG. 4a, a predetermined curved surface is previously formed on the top plate 11 a and the bottom plate 11 b constituting the connector 11. In other words, the predetermined curved surface is formed prior to heat being generated in the reformer. Thermal expansion stress transmitted in a perpendicular direction of the central axis when the reformer is actuated is partially absorbed in elasticity of the materials of the top plate 11a and the bottom plates 11 b and the formed curved surface as shown in FIG. 5. Thereafter, when the reformer stops, the reformer is restored to the original shape shown in FIG. 4a by the elastic force of the top plate 11a and the bottom plate 11 b and the thermal shrinkage of the bottom of the first space 12.

A contour line of the curve portion formed on the top plate 11a and the bottom plate 11 b is formed forms a concentric circle based on the central axis of the heating unit, such that the bottom of the first space 12, and the top plate 11a and the bottom plate 11 b are evenly stressed in the diameter direction, thereby minimizing a probability of the damage.

Fig 4b is a plan view showing a bottom-curved plate of the connector. As shown in Fig 4b, the bottom plate is partially curved by a press or similar means. In the illustrated embodiment, the curved portion is partially pressed near the nozzle of the second combustor. In the present invention of Fig 4b, the pressing position is about one third(d1) of a radius(d2) of a bottom plate. The bottom-curved plate can minimize or alleviate the thermal stress or thermal expansion.

Therefore, as shown in Figure 4b, in some embodiments of the invention, the bottom plate is curved with a first curved portion formed proximate the nozzle of the second combustor. In other embodiments the bottom plate can have other shapes. For example, the bottom plate can be curved with a series of portions with U-shaped cross sections. Such portions with U-shaped cross sections could be convex or concave, or a series of convex and concave portions (for example alternating). Likewise, the top plate could have similar shapes.

As described above, Figure 4a shows a reformer including a heating unit comprising a heating unit chamber that extends in a first direction, and a combustor (the second combustor 22) arranged to receive and oxidize anode off gas. A reforming unit including a first space is formed around the heating unit chamber, and a second space is formed around the first space. A flow path portion arranged to connect the first space and the second space at an end of the first and second space is also provided in part by the connector 11.

Here the "flow path portion" refers to the region of the reforming unit that connects the first space and the second space at an end of the first and second space. Thus, the flow path portion is a region that can extend in the first direction (the extension direction of the heating unit chamber), as well as in a second direction between the first space and the second space. In other words, the "flow path portion" can refer to the end region of the first and second spaces and the connecting region between the first and second spaces.

As shown in Figure 4a, the reforming unit comprises a deformable region located adjacent the combustor, the deformable region being arranged to deform in a predetermined manner as result from heat from the combustor. As a result, in some embodiments, the deformable region is arranged to return to its original shape in the absence of heat from the combustor. In other words, in some embodiments of the invention the deformable region is arranged to deform elastically in the predetermined manner as result from heat from the combustor.

By providing such a deformable region, reformers according to such embodiments of the invention can have high durability. It will be appreciated that a combustor (second combustor 22) arranged to receive and oxidize anode off gas will be associated with high temperature. These high temperatures will act to cause high thermal expansion of the reformer materials in the region of the combustor. To avoid the thermal damage of the type illustrated in Figure 3, such embodiments of the invention provide a deformable region arranged to deform elastically in the predetermined manner as result from heat from the combustor. Hence, instead of the uncontrolled warping of the material shown in Figure 3, reformers according to such embodiments of the invention can deform elastically in the predetermined manner as result from heat from the combustor. Such deformable regions accommodate thermal expansion in a way that does not cause damage to the parts of the reformer. Hence, such embodiments can withstand repeated cycles of heating associated with using the reformer for long periods. Hence, such embodiments have a high durability.

In other words, such deformable regions as described above, enable the reformer to operate for a long time without deterioration or damage.

In some embodiments of the invention, the deformable regions can effectively protect the flow path portion of the reformer (i.e. the end region of the first and second spaces) for permanent damage of the type shown in Figure 3.

In the embodiment shown in Figure 4a, the deformable region comprises curved portions on the top and bottom plates of the connector 11. In particular, the flow path portion comprises a first surface and a second surface that extend at least partially in a second direction that intersects with the first direction, and in some embodiments at least one of the first and second surfaces of the flow path portion connector forms part of the deformable region. The second surface can form an end portion of the reformer. In Figure 4a, first surface and the second surface of the flow path portion connector comprise a curved portion that forms part of the deformable region. These curved portions form a concentric circle around an axis that extends in the first direction, and have a U-shaped cross section. Other embodiments of the invention can use a deformable region (for example a curved surface) on only one of the first or second surface (or other region) of the flow path portion. In some embodiments, the deformable region could be formed on a surface of the flow path portion facing the combustor and located adjacent the combustor.

The illustrated embodiments show the deformable region being provided by one or more curved portions. However, other embodiments could use other structures. For example, a series of corrugations with a V shaped cross section could provide a deformable region that is able to elastically deform in a predetermined manner as result from heat from the combustor. Other deformable region could have different cross sections.

In other embodiments of the invention, the deformable region can be located on a different part of the reformer. For example, in some embodiments, the deformable region could be located on an inner wall of the heating unit chamber, for example on the inner of the two walls that define the first space 12. In such embodiments, the deformable region could comprise a curved portion, for example with a U-shaped cross section. Such an inner wall of the heating unit chamber could form part of the flow path portion, or could be located on a different portion of the reformer.

In other embodiments, the deformable region could comprise several regions of the reformer. For example, the deformable region could comprise a curved surface (or otherwise) on the inner wall of the heating unit chamber and on one or both of the top and bottom surfaces of the flow path portion.

In the illustrated embodiments, the reformer comprises a combustor (second combustor 22) arranged to receive and oxidize anode off gas, and another combustor (first combustor 21) arranged to receive and oxidize heating unit fuel. In some embodiments, the combustor is located at a first end of the heating unit chamber and the second combustor is located at an opposite end of the heating unit chamber. In other embodiments, there may be a single combustor.

In the illustrated embodiments, the combustor arranged to receive and oxidize anode off comprises at least one nozzle arranged to supply the anode off gas to the heating unit chamber in a direction that intersects with the first direction, optionally in a direction perpendicular to the first direction. This is shown in Figures 6 and 7. It will be appreciated that other embodiments of the invention could use different combustor nozzle arrangements.

While the present invention has been described in connection with certain exemplary embodiments, it is to be understood that the invention is not limited to the disclosed embodiments, but, the present invention may be implemented by various reformers without departing from the scope of the invention as defined in the appended claims and-equivalents thereof.

## Claims

1. A reformer comprising:
a heating unit comprising a heating unit chamber that extends in a first direction, and a combustor arranged to receive and oxidize anode off gas;
a reforming unit including a first space formed around the heating unit chamber, a second space formed around the first space, and a flow path portion arranged to connect the first space and the second space at an end region of the first and second space;
wherein the reforming unit comprises a deformable region located adjacent the combustor, the deformable region arranged to deform in a predetermined manner as result from heat from the combustor.

2. A reformer according to Claim 1, wherein the deformable region comprises at least one curved portion.

3. A reformer according to Claim 1 or 2, wherein the flow path portion comprises a first surface and a second surface that extend at least partially in a second direction that intersects with the first direction;
wherein at least one of the first and second surfaces of the flow path portion forms part of the deformable region.

4. A reformer according to Claim 3, wherein at least one of the first surface and the second surface of the flow path portion comprises a curved portion that forms part of the deformable region.

5. A reformer according to Claim 4, wherein said curved portion forms a concentric circle around an axis that extends in the first direction.

6. A reformer according to Claim 4 or 5, wherein said curved portion includes a convex portion.

7. A reformer according to any one of Claims 4 to 6, wherein said curved portion has a U-shaped cross section.

8. A reformer according to any one of Claims 1 to 7, wherein the deformable region is at least partially located on an inner wall of the heating unit chamber.

9. A reformer according to Claim 8, wherein the deformable region comprises a curved portion, optionally with a U-shaped cross section.

10. A reformer according to any one of Claims 1 to 9, wherein the heating unit is arranged to receive and oxidize heating unit fuel and anode off gas.

11. A reformer according to any one of Claims 1 to 10, wherein the combustor comprises at least one nozzle arranged to supply the anode off gas to the heating unit chamber in a direction that intersects with the first direction, optionally in a direction perpendicular to the first direction.

12. A reformer according to any one of Claims 1 to 11, wherein the heating unit comprises a second combustor arranged to receive and oxidize heating unit fuel.

13. A reformer according to any one of Claims 1 to 12, wherein the flow path portion is located adjacent the combustor.

14. A reformer according to Claim 12 or 13, wherein the combustor is located at a first end of the heating unit chamber and the second combustor is located at an opposite end of the heating unit chamber.

15. A reformer according to any one of Claims 1 to 14, wherein:
the reforming unit is arranged to reform fuel by a steam reforming reaction in the first space; and/or
wherein the reforming unit is arranged to perform a water gas shift reaction in the second space.
